Europäisches Patentamt

European Patent Office

Office européen des brevets

(19)

(11) Numéro de publication: **0 310 706 B1**

(12) **FASCICULE DE BREVET EUROPEEN**

(45) Date de publication de fascicule du brevet: **09.09.92**   (51) Int. Cl.⁵: **B01D 25/12**

(21) Numéro de dépôt: **87117146.8**

(22) Date de dépôt: **20.11.87**

Le dossier contient des informations techniques présentées postérieurement au dépôt de la demande et ne figurant pas dans le présent fascicule.

(54) **Membranes pour plateaux de filtres-presses.**

(43) Date de publication de la demande:
**12.04.89 Bulletin  89/15**

(45) Mention de la délivrance du brevet:
**09.09.92 Bulletin  92/37**

(84) Etats contractants désignés:
**BE DE ES FR GB IT**

(56) Documents cités:
DE-A- 2 358 578
FR-A- 2 398 529
GB-A- 393 174
GB-A- 1 330 125
US-A- 3 017 996

(73) Titulaire: **Parmentier, Alfred Henri**
**69, Boulevard Machtens B6**
**B-1080 Bruxelles(BE)**

(72) Inventeur: **Parmentier, Alfred Henri**
**69, Boulevard Machtens B6**
**B-1080 Bruxelles(BE)**

## Description

Les filtres-presses sont bien connus, pour séparer des particules de matière solide d'un liquide formant ensemble une bouillie à filtrer. Ils s'utilisant dans la plupart des industries et traitements d'eaux.

Ils comprennent une ossature formée par une plaque de résistance de pied, une plaque de résistance de tête qui sont fixes et reliées par des tirants. La plaque de tête porte un vérin puissant qui agit sur une plaque de résistance mobile, située entre les deux premières et supportée par les tirants, sur lesquels elle se déplace.

Entre la plaque de pied et la plaque mobile, vient une pluralité de plateaux filtrants et de cadres coopérant avec eux dans le système plateau/cadre ou bien des plateaux creusés par des chambres remplaçant le cadre, dans le système plateaux chambrés. Chaque plateau comporte à sa périphérie des surfaces planes appelées surfaces d'étanchéité, qui sont serrées entr'elles, d'un plateau au suivant, pour filtrer sous pression. Entre les surfaces d'étanchéité se situe l'âme du plateau. Elle ports des cannelures ou des pastilles permettant l'écoulement de la phase liquide (filtrats) ayant traversé un tissu filtrant recouvrant chaque plateau et retenant la phase solide, qui forme un gâteau. L'âme n'est plus cannelée ou pastillée dans sa masse, sur une ou les deux faces, si la plateau porte 1 ou 2 membranes. Celles-ci sont cannelées ou pastillées et assurent par leur gonflage la compression des gâteaux filtrés, dans le but de les assécher le plus possible. A cet effet, les membranes sont expansées par un fluide sous pression (air, eau) agissant sur le dos non cannelé de la membrane, via une chambre recevant ce fluide. Les avantages procurés par ces membranes sont importants.

### Etat de la technique.

I-) L'emploi pour les plateaux du polypropylène, résistant jusqu'à 110°C et à l'agressivité du plus grand nombre de produits chimiques, a conduit à la conception d'une membrane en polypropylène aussi. Elle est constituée par une feuille mince recouverte de pastilles. Chaque membrane est soudée entre les éléments du plateau formant les surfaces d'étanchéité. Le plateau est creusé dans l'âme pour former la chambre recevant le fluide de gonflage.

Mais comme la polypropylène est très peu élastique et expansible, le moindre incident de filtration provoque la cassure de la membrane. (Voir brevets FR-A-2 215258, FR-A-2 384 526 et EP-A-0 081 715).

Ce cas fréquent se produit si le gâteau a comprimer ne remplit pas entièrement le cadre (plateau/cadre) ou les chambres (plateau chambré). Il se produit encore si le fluide de gonflage est à pression trop élevée, ce type ce membrane ne supportant que des pressions réduites. Il se produit aussi, si la nature du gâteau permet de réduire son épaisseur assez largement par la compression, ce qui est courant.

II-) La ou les membranes d'un plateau sont moulées en une pièce en élastomère (caoutchouc, thermoplastique etc). Une face est lisse, l'autre est cannelée ou pastillée, sauf sur une partie périphérique qui reste plane, pour être serrée entre les surfaces d'étanchéité ( ex. Voir brevet GB-A-1.118.383). Des membranes sont réalisées en forme de sac (Voir brevets DE-A-1 611139 et FR-A-2 255 092).

Dans tous les cas,

* il faut des moules et presses coûteux pour chaque dimension et/ou forme du plateau, donc des membranes.

* elles doivent supporter la température de la bouillie et avoir la résistance chimique aux produits à filtrer, donc être adaptées à chaque cas spécifique de filtration.

* elles doivent permettre une compression entre les surfaces d'étanchéité, correspondante à la pression exercée par la vérin sur les dites surfaces. Cette pression tend à laminer la partie plane des membranes, qui sort des limites des mêmes surfaces.

* Leur coefficient de dilatation linéaire doit être très proche de celui de la matière rigide formant les surfaces d'étanchéité, ce qui exclut logiquement à haute température (ex.90°C) l'emploi de membranes en élastomère (coefficient $1,8 \times 10^{-4}$) avec des aciers (coefficient $0,12 \times 10^{-4}$) et d'autres métaux.

* A température élevée, l'expansion de la membrane lui donne une déformation permanente dans sa partie cannelée ou pastillée où la membrane est libre, tandis que sa partie plane est serrée entre les surfaces d'étanchéité.

* Mais surtout, la membrane an élastomère est très fragile par sa petite partie périphérique lisse, entre les surfaces d'étanchéité et les cannelures ou pastilles. Cette partie est indispensable, car elle seule reste élastique, la surface cannelée ou pastillée l'étant beaucoup moins.

Elle doit aussi avoir une largeur relativement faible (10 à 12 mm) car il faut soutenir le tissu filtrant à cette périphérie, sous peine de déchirer ce tissu.

Cette petite partie lisse est soumise à un vieillissemnt par suite des flexions successives qu'elle subit au gonflage et au dégonflage de la membrane. Ce vieillissemnt est accéléré par la température et par de nombreux ingrédients chimiques des bouillies à filtrer. Ce vieillissement provoque la déchirure de la membrane.

III-) Le brevet US-A-3,347,383 fait état de l'emploi du tissu filtrant lui-même comme membrane. Ce tissu n'est ni cannelé ni pastillé et doit être installé sur une boîte séparés à filtrats. Après filtration, de l'air comprimé est soufflé dans cette boîte et gonflerait le dit tissu, pour comprimer le gâteau. En aucun cas ce tissu ne saurait être imperméabilisé, sinon il ne filtrerait plus. Partant l'air traverse le tissu qui se trouve opposé au gâteau filtré. Le tissu filtrant a en conséquence peu d'efficacité, par rapport à une membrane imperméable à l'air.

Une recherche d'antériorités a décelé une quinzaine de brevets ayant trait à des membranes comme ci-avant, mais aucun ne présente celle(s) comme décrit ci-après.

Nos objectifs suivant l'invention sont

a) éviter l'emploi de presses et moules coûteux, pour les différentes dimensions et formes des membranes.

b) éviter l'influence de la température et de l'agressivité chimique sur la membrane.

c) éviter l'influence des coefficients différents de compression et de dilatation de la membrane avec les autres constituants du plateau.

d) supprimer la partie en élastomère sujette à vieillissement et la remplacer par un élément insensible à lui.

e) supprimer au gonflage, le bombement en espèce de "chapeau chinois" des membranes en élastomère ou en polypropylène et le remplacer par un déplacement latéral de toute la partie cannelée ou pastillée de la membrane, celle-ci du fait des cannelures ou des pastilles, étant plus rigide et moins déformable.

L'auteur de la présente a précédemment breveté des plateaux incassables et indéformables, car la matière rigide (généralement le polypropylène) est réduite à des encadrements périphériques seulement, ayant des surfaces d'étanchéité, au lieu de plateaux complets, pleins en matière rigide, malgré l'emploi de membranes.

Le dessin ci-après pour la description reprend cette nouveauté, mais il est exprèssément entendu que la présente invention s'applique à tous les plateaux, qu'ils soient pleins, et qu'ils soient du système plateau/cadre ou de celui des plateaux chambrés ou de ceux à encadrements.

Ce qui suit concerne un mode de réalisation, comme exemple appliquant les principes exposés plus loin, de membranes suivant l'invention.

La description se réfère à la

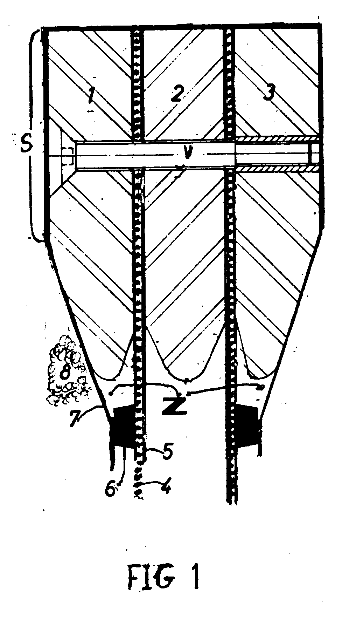

Figure 1: Coupe verticale dans un plateau, à deux membranes suivant l'invention.

Le plateau représenté comporte en matière rigide (ex. polypro pylène) :

trois encadrements (1-2-3) entre lesquels viennent des tissus (4), ces constituants étant par exemple assemblés par vis (V) sur tout leur pourtour. Les dits encadrements comportent des surfaces d'étanchéité (S). Sur les tissus (4) et entre les encadrements viennent des éléments profilés (cannelures ou pastilles (6) laissant entr'eux des espaces de 6 à 12 mm.

Chaque face d'un plateau est recouvert de tissu filtrant (7) (à ne pas confondre avec le tissu non filtrant (4)).

Par filtration du mélange solide/liquide introduit sous pression dans un cadre (non représenté) ou dans la chambre d'un plateau chambré, le tissu filtrant (7) retient la matière solide pour former le gâteau (8), tandis que les filtrats traversent (7), entrent dans les espaces entre les profilés ( des pastilles ( 6 ) sont représentées au dessin), descendent vers la partie basse des encadrements et sont évacués de manière bien connue.

Les tissus (4) sont de préférence en polypropylène, mais peuvent être en toute autre matière naturelle ou synthétique. Les cannelures ou les pastilles (6) doivent rester à 8 à 12mm environ des encadrements (1-2-3), laissant libre les tissus (4) dans cet espace, qui est la zône sensible (Z) permettant à la partie de la membrane munie de cannelures ou de pastilles, de se déplacer vers l'intérieur de l'encadrement (2) par la pression de filtration et vers l'extérieur du dit encadrement, lors de la compression du gâteau.

Cet encadrement (2) est la chambre d'entrée du fluide de déplacement des membranes pour la compression des gâteaux. Les membranes ainsi constituées ne peuvent évidemment pas laisser passer des filtrats vers la chambre/encadrement (2) ni du fluide de compression vers le gâteau.

Aussi, les tissus (4) formant membranes sont imperméabilisés sur une ou deux faces par une mince couche (5) d'élastomère (caoutchouc ou autre élastomère) gardant au tissu (4) toute sa souplesse.

Les principes de base de l'invention, sont de remplacer la partie sensible (zône Z) sujette à cassure (voir I-) ou à déchirure (voir II-) des membranes de l'état de la technique par une petite zône(Z) de tissu non sujet à ces inconvénients et de remplacer le bombement des membranes de la technique, par un déplacement latéral de la partie cannelée ou pastillée, par le jeu du seul tissu imperméabilisé, dans la Zône (Z) sur la partie intérieure des encadrements (1-2-3).

**Revendications**

**1.** Membranes cannelées ou pastillées pour filtres-presses à plateaux constitués par l'assemblage de trois encadrements (1 , 2 ,3) rigides et comportant à leur périphérie des surfaces d'étanchéité planes (S) serrées de plateau à plateau, et par deux membranes (4) formant l'âme du plateau, cannelées ou pastillées entre les encadrements (1,2,3), caractérisé en ce que chaque membrane (4) est un tissu imperméabilisé (5) ayant les dimensions du plateau et formant à sa périphérie les parties planes serrées entre les encadrements et présentant, entre les encadrements et les cannelures ou pastilles, une zône (Z) désolidarisée des cannelures ou des pastilles permettant le déplacement latéral de l'âme cannelée ou pastillée, soit durant la filtration, soit durant la compression des gâteaux filtrés.

**Claims**

**1.** Grooved or pipped membranes for the filter-presses plates constituted by the assembly of three rigid framings (1-2-3) having at their periphery flat sealing surfaces (S) and by two membranes forming the heart of the plate, grooved or pipped between the framings (1-2-3) characterized by the fact that each membrane (4) is a cloth which is impermeabilized (5), having the sizes of the plate and at its periphery flat surfaces tightened between the framings and that between the framings and the grooves or the pips is reserved a zone (Z) allowing a lateral displacement of the grooved or pipped heart during the filtration or during the compression of the filtered cakes.

**Patentansprüche**

**1.** Gerippte oder genoppte Membranen für durch den Zusammenbau von drei steifen, auf ihrem Umfang plane und von Platte zu Platte gegeneinandergepreßte Dichtigkeitsflächen (S) aufweisenden Umrahmungen (1, 2, 3) und zwei gerippten oder genoppten, den Kern der Platte bildenden Membranen (4) zwischen den Umrahmungen (1, 2, 3) gebildete Plattenfilterpressen, dadurch gekennzeichnet, daß jede Membran (4) ein wasserundurchlässig gemachtes Gewebe (5) ist, das die Ahmessungen der Platte hat und auf seinem Umfang die planen, zwischen den Umrahmungen gegeneinandergepreßten Teile bildet und zwischen den Umrahmungen und den Rippen oder Noppen eine von den Rippen oder Noppen getrennte Zone (Z) aufweist, die die seitliche Verschiebung des gerippten oder genoppten Kerne entweder während der Filtration oder während der Kompression der Filterkuchen erlaubt.

FIG 1